Europäisches Patentamt

European Patent Office

Office européen des brevets

(11) Publication number: 0 426 312 A2

# (12) EUROPEAN PATENT APPLICATION

(21) Application number: 90311034.4

(22) Date of filing: 09.10.90

(51) Int. Cl.5: B21C 23/03, B21K 21/00, H01M 2/30

(30) Priority: 30.10.89 US 429929

(43) Date of publication of application:
08.05.91 Bulletin 91/19

(84) Designated Contracting States:
DE FR GB IT

(71) Applicant: GENERAL MOTORS CORPORATION
General Motors Building 3044 West Grand
Boulevard
Detroit Michigan 48202(US)

(72) Inventor: Walker, Billy R.

RR1 Box 374-A
Daleville, IN 47334(US)
Inventor: Dean, Robert E.
RR1 Box 101-0
Yorktown, IN 47396(US)
Inventor: Emmons, George B.
57 Circle Drive
Chesterfield, IN 46017(US)

(74) Representative: Haines, Arthur Donald et al
Patent Section Vauxhall Motors Limited 1st
Floor Gideon House 26 Chapel Street
Luton, Bedfordshire LU1 2SE(GB)

(54) Cold-forming dies and cold-forming process.

(57) Progressive step and compound dies (50,66,78) are employed in a cold-working process to form a metallic pre-form (42) of selected mass into a precision-finished, pore-free, annular bushing (64) with a mass substantially equal to that of the pre-form (42), for use as a battery terminal which allows the fracture-free spin-over connection of a stem (46) of the bushing (64) to a battery cover (102) and the close-fit of the bushing (64) on a battery post (103) when the cover (102) is fitted to a battery casing.

FIG.4    FIG.6    FIG.5

FIG.7

## COLD-FORMING DIES AND COLD-FORMING PROCESS

This invention relates to the cold-forming of a metallic pre-form of predetermined mass into a bushing of predetermined specifications as specified in the preamble of claim 1, for example as disclosed in EP-A-0 261 311. More particularly, this invention concerns a new and improved process for cold-forming a finished metallic bushing for a battery terminal effectively utilizing all of the material of the pre-form and to new and improved die construction for cold-forming bushings.

Prior to the present invention, lead alloy battery terminal bushings have been mass-produced by die-casting with good success. However, porosity occurring in some of these bushings caused faults in their stem portions which may fracture as the stem portion is spun-riveted over when the battery cover and bushing are assembled together. This results in rejection of such assembled parts adding to battery costs for re-cycling or re-manufacture. Furthermore, in some die cast bushings, gases trapped in voids or pores in the metal cause splattering, poor fusion and poor weld penetration during the inert gas welding operation generally used to join the external bushing to the cell post to form the finished terminal. Finished terminals made with cast bushings may also have blackened cable attachment towers caused by electrolyte leaching through the pores in the bushing. This terminal discoloration is objectionable since it detracts from battery appearance and purchaser acceptance.

In addition to die-cast bushings, extruded or cold-formed bushings and solid terminals have been utilized or proposed prior to the present invention. For example, in U.S. patent 4,422,236 a method of extruding solid terminals for batteries is disclosed in which the terminal is formed by extrusion and a fixture of harder material is concurrently captured within the body of the terminal. In European patent application 0261311, a process for cold-forming battery terminal bushings is disclosed in which a solid blank is pierced, cold-formed and subsequently trimmed to size by removal of excess metal from opposite ends of the cold-formed bushing.

A process of making a metallic pre-form into a finished bushing according to the present invention is characterised by the features specified in the characterising portion of claim 1.

The present invention relates to a process and apparatus for cold-forming battery terminal bushings which advantageously utilizes substantially all of the material in a final pre-formed part (i.e., before cold-forming takes place) to provide a finished product that needs no trimming, cutting to size, or other finishing steps before being employed as a bushing for attachment to a battery cover and for subsequent close fitting on a battery terminal post.

The initial pre-form for the bushing of this invention is made from a blank of lead, lead alloy, or other suitable material by any suitable method to provide an initial shape of specified dimensions and mass. For example, the initial pre-form may be of a specific mass, generally torodial or doughnut-like in shape having a fixed height and fixed inner and outer diameters. After the doughnut-shaped pre-form is completed, it is loaded in a first of two progressive cold-forming die sets which is used to make a final pre-form having a cylindrical stem with fixed inner and outer diameters cold-worked from the doughnut-shaped pre-form. This is accomplished by a ram and forming arbor which forwardly extrudes the cylindrical stem in a die-closing operation. Subsequently, in a second die set, the completely finished bushing with a flange is formed midway between the stem and a cable-connecting tower for mounting the bushing to the battery cover. This tower is simultaneously formed by reversely extruding a portion of the initial pre-form around the arbor and within the interior of a ram that applies an axial load to the pre-form. The arbor further cold-forms the interior wall of the bushing and a tapered central opening through the bushing is provided. During this operation, anti-turn lugs adapted to fit into recesses in the battery cover are closed die-forged on the underside of the mounting flange. With this second progressive die, the formation of the bushing is complete and is properly sized so that no trimming or further operation is needed to finish the bushing. With the cold-forming operation, the porosity of the bushing is reduced to a minimal porosity so that the stem can be readily spun-riveted to form the cover and bushing assembly without breakage or damage from pore-weakened metal material. In the event that single step manufacture is desired, the present invention includes compound dies which unite the principle of reverse and forward extrusion with coining in one operation. The preferred embodiments of this invention determine pre-requisite dimensional limits of the bushing and include ejector mechanisms which form a part of the wall of the die cavity and which are used to remove cold-formed parts axially from the dies.

It is a feature, object and advantage of this invention to provide a new and improved process of precision cold-forming and finishing metallic terminal bushings for batteries and the like which eliminates any finishing of the part after removal from the cold-forming dies.

Another feature, object and advantage of this invention is to provide new and improved die constructions for making battery terminal components from metallic material which includes reverse extrusion of a portion of a pre-form whilst other portions thereof are being coined and forwardly extruded.

The invention and how it may be performed are hereinafter particularly described with reference to the accompanying drawings, in which:

Figure 1 is a pictorial view of a doughnut-shaped pre-form for a battery terminal bushing to be cold-formed therefrom.

Figure 1A is a pictorial view of a final pre-form to be cold-formed into a finished battery terminal bushing.

Figures 2 and 3 are sectional views of a first set of progressive die sets, before and after cold-forming the pre-form part of Figure 1 loaded therein.

Figures 4 and 5 are sectional views of a second set of progressive die sets, before and after cold-forming the pre-form part of Figure 1A produced by the die set of Figures 2 and 3.

Figure 6 is a pictorial view of the terminal bushing produced by the die set of Figures 4 and 5.

Figure 7 is a cross-sectional view of a bushing of Figure 6 as installed in a battery cover and onto a battery terminal post.

Figures 8, 9 and 10 are cross-sectional views of a compound die set illustrating cold-forming of a blank into a completed bushing.

Figures 11, 12 and 13 are cross-sectional views of a compound die set for cold-forming a stemmed pre-form from a cylindrical blank.

Figure 14 is a cross-sectional view of a finishing die set for cold-forming a finished bushing from the pre-form produced by the die set of Figures 11, 12 and 13.

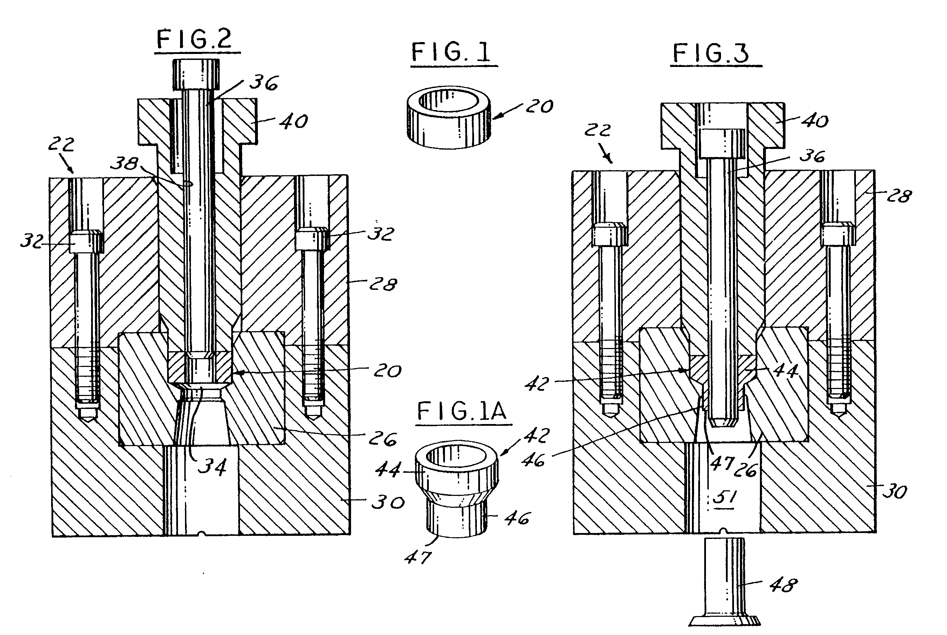

Turning now in greater detail to the drawings, there is shown in Figure 1 a doughnut-shaped pre-form 20 produced by cold-forming or by another suitable process (e.g., extrusion) to have a predetermined mass and predetermined internal and external diameters.

This pre-form 20 is cold-worked into a finished terminal bushing by the use of a pair of progressive die sets 22 and 24 shown in Figures 2 to 5. The doughnut-shaped pre-form 20 is loaded in a forward extrusion die 26 of die set 22 which is operatively mounted in a cavity provided between upper and lower support blocks 28, 30 removably secured together by cap screws 32. The extrusion die 26 has an annular and shouldered die orifice 34 which, in conjunction with a cylindrical forming arbor 36 that reciprocates through a centre bore 38 of a powered and downwardly-reciprocating ram 40, produces a cold-worked final pre-form element 42. This pre-form element 42 has substantially the same mass as the doughnut-shaped pre-form and is formed to have a cylindrical interior wall defining a fixed internal diameter. As shown in Figures 1A and 3, the pre-form element 42 has a cylindrical head 44, the lower surface of which tapers inwardly to a cylindrical stem 46 with terminal end 47. The pre-form element 42 is removed from the extrusion die 26 by upwards movement of ejector pin 48 through opening 51 in support block 30.

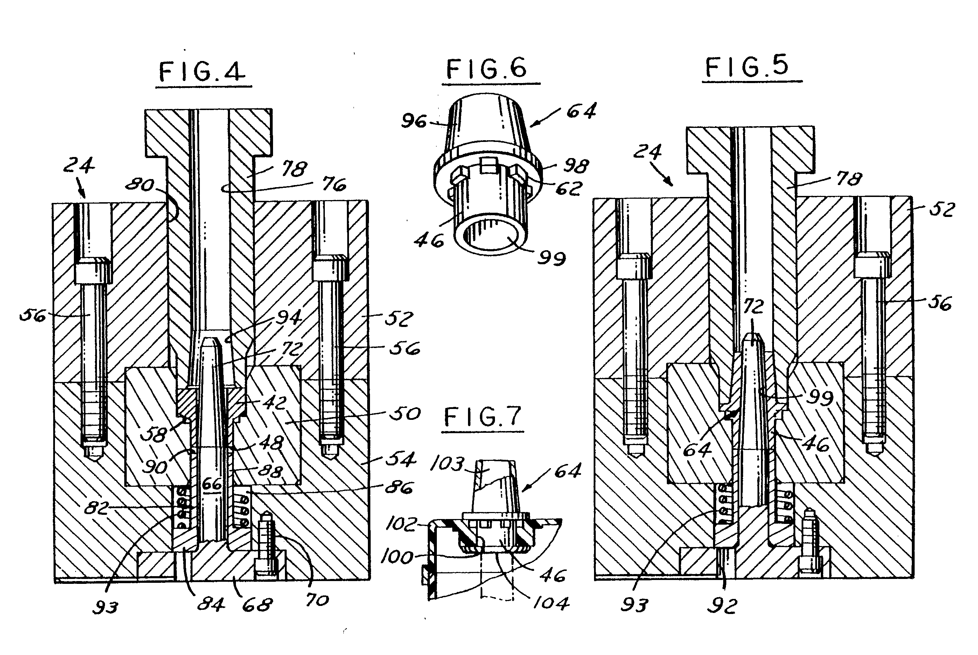

Figure 4 shows the die set 24 having a finishing die 50 secured in operative position within a recess in upper and lower support blocks 52, 54 fastened together by screws 56. The die 50 has a cylindrical, stepped, shouldered die orifice 58 therein which receives the pre-form element 42 as cold-formed by the die set 22. The shoulder of the die orifice has an annular arrangement of spaced teeth (i.e., castellations) to form anti-turn lugs 62 on the otherwise flattened lower surface of finished bushing 64 as best shown in Figure 6.

The finishing die set 24 has a generally cylindrical forming arbor 66 upstanding from an enlarged base 68 secured to the lower support block 54 by screw 70. Arbor 66 has a tapered nose 72 projecting through the die orifice 58 and the cylindrical opening of pre-form element 42 which has been loaded into the die set. As shown, the arbor nose extends into a centre bore 76 of a ram 78 that is operatively mounted in bore 80 of the block 52. Supported on the base 54 is a vertically-movable stop and part-stripper 82 having a cylindrical head 84 mounted in a counter-bore 86 and an elongated cylindrical stripper tube 88 which extends around arbor 66 into die orifice 58 to the lower end 47 of the stem of the pre-form element 42. An annular upper end 90 of the stripper tube 88 forms a limit for the terminal end 47 of stem 46 of the cold-formed finished bushing 64 as shown by Figure 5. For removal of the finished bushing 64 from the die set 24, three rods (only one of which is shown) or other actuator mechanism may be inserted through corresponding openings 92 in the arbor base 68 to move the stripper 82 upwardly against the force of a spring 93 to axially displace the completed finished bushing 64 from the arbor 66 and out of the finishing die 50 when die set 24 is opened.

The ram 78 is operated by any power drive mechanism such as an eccentric drive or crank arm or a double-acting hydraulic or pneumatic power cylinder to force the ram to the Figure 5 position in which lugs 62 are formed by coining. A portion of the head 44 of the pre-form element 42 is reversely-extruded into the conical upper half of the die cavity formed by a conical end opening 94 of ram 78 and the tapered upper nose 72 portion of the arbor 66 to form tower 96 rising above a formed annular flange 98 extending radially in a principal plane to a fixed diameter. Inner wall 99 of the cold-formed finished bushing 64 tapers inwardly from the stem 46 to the tower 96 to facilitate removal from the die set and during battery assembly to fit closely onto a battery terminal post 103 which extends upwardly from cell elements of the battery and has a complimentary taper. The ram 78 is axially removed from the die set 24 and the lower end of the bushing 64 is contacted by the stripper 82 which, when moved upwardly, ejects the cold-formed finished bushing 64 out of the forming dies through bore 80.

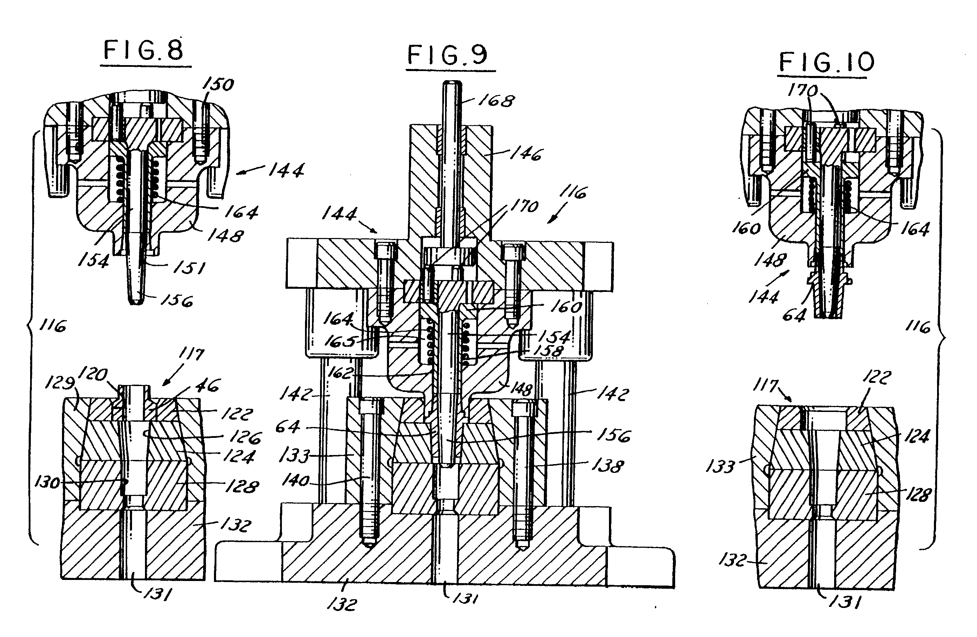

The ejected substantially pore-free lead alloy finished bushing 64 of Figure 6 has the same mass as the initial and final pre-forms and requires no additional sizing operations. The stem of this bushing is placed in an opening 100 in battery cover 102 notched to receive the locking lugs 62, and the lower end of stem 46 is subsequently spun over at 104 to secure the bushing to the cover as shown in Figure 7. The bushing is then fitted on the correspondingly-tapered battery terminal post 103 and these parts are welded together (i.e., at the tops of the post 103 and tower 96).

Figures 8, 9 and 10 disclose the bushing 64 being cold-formed by a compound die set 116 having a lower die assembly 117. The pre-form element 42 of Figure 1A is supported by the lower die assembly 117 on a seat defined by a cylindrical wall 120 of an uppermost die block 122 stacked on intermediate die block 124 that has a smaller diameter and a tapered annular forming wall 126. The block 124 in turn is stacked on a bottom die block 128 having an annular wall 130 that defines an access opening aligned with the orifices of die blocks 122 and 124 and an opening 131 in a bolster plate 132. The die blocks 122, 124 and 128 are mounted in a die block holder 133 which is secured to bolster plate 132 by screws 138, 140.

Mounted on guide posts 142, for vertical movement between open and closed position with respect to the lower die assembly 117, is an upper die assembly 144. The upper die assembly includes a press ram 146 secured to an upper punch shoe, not shown, and a punch 148 secured by screws 149 to the press ram. As illustrated by Figures 8, 9 and 10, the punch 148 has an internal annular die surface 151 shaped to form the stem 46 and anti-turn lugs 62 and the flattened lower surface of the flange 98 of the finished bushing 64, as best shown in Figure 6. An arbor 154 having a conical metal working nose 156 is rigidly held by the press ram 146 and reciprocates with the punch 148. Mounted for axial movement in the upper die shoe is a part-stripper 158 having a large diameter abutment head 160 and a part-stripper sleeve 162 depending downwardly therefrom that surrounds the cylindrical main body of arbor 154. Helical spring 164 trapped in a spring pocket 165 formed in punch 148 provides the force to urge the stripper 158 to the upper position shown in Figures 8 and 9. The lower end of the stripper sleeve 162 limits the flow of metal during cold-forming to establish the end of stem 46 of the finished bushing 64.

In a cold-forming operation, the pre-form element 46 is loaded in the die set 116 when opened as shown in Figure 8. The upper die assembly 144 is moved under predetermined load to a closed position shown in Figure 9. In this single stage cold-forming operation, the punch 148 engages the tapered shoulder on the pre-form element 42 before the arbor 154 engages the inside diameter of the pre-form element 42. During the die-closing action, the stem 46 of the bushing 64 is reversely-extruded, and anti-turn lugs 62 are coined thereon whilst the tower 96 is forwardly-extruded to completely finish the bushing 64 with tapered, conical inner wall 99, as in Figure 6, so that it is ready for installation into the battery cover 102 and onto the terminal post 103, as shown in Figure 7.

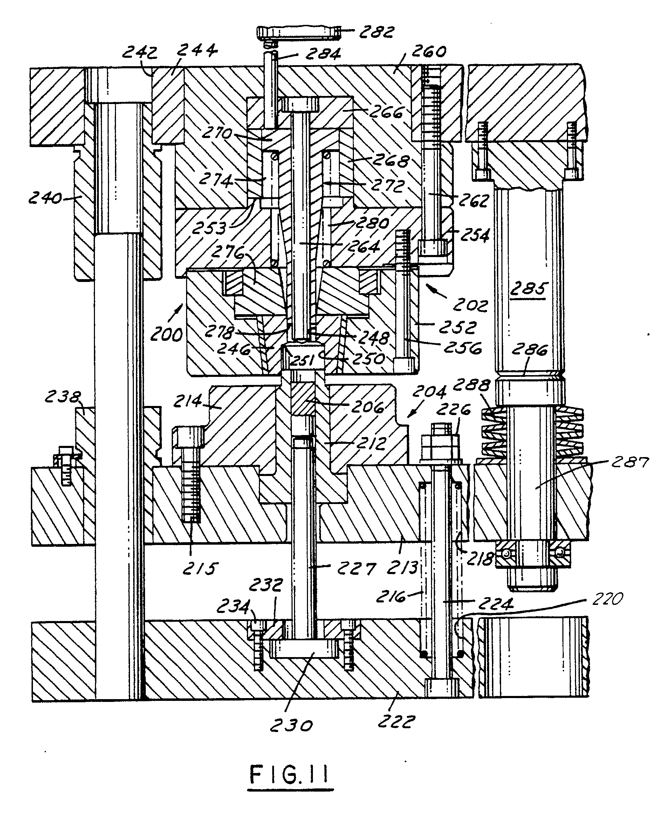

When stripping the cold-formed finished bushing 64 from the upper die assembly 144, an actuator 168 is moved downwardly to push three contact pins 170 (only two of which are shown) downwardly, the ends of which contact the head 160 of the stripper 158 and pushes it downwardly to compressively load the spring 164. The cylindrical stripper 158 engages the end of the stem of the finished bushing 64 to eject the bushing 64 completely from the upper die assembly 144 as shown in Figure 10.

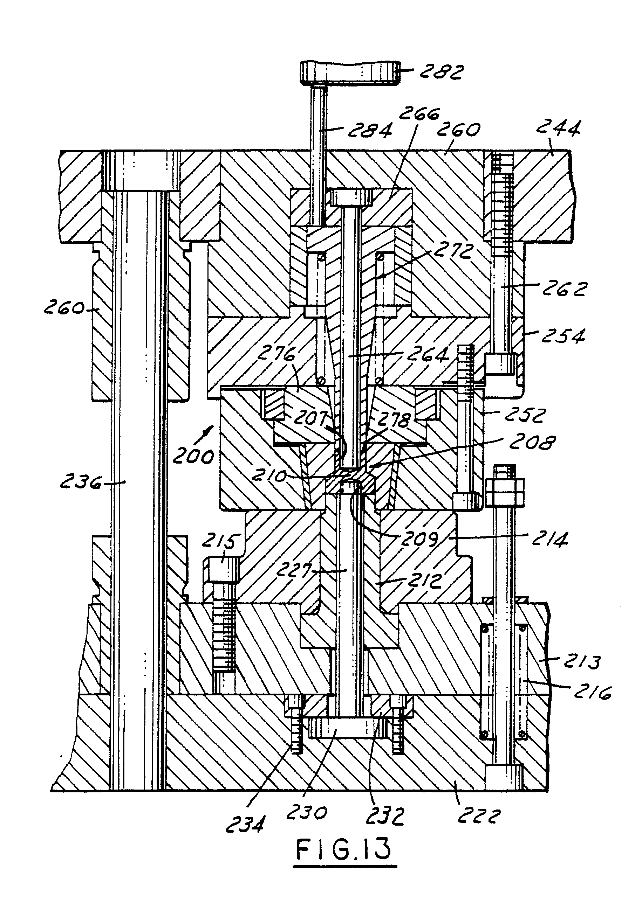

Figures 11 to 13 show another preferred compound die set 200 having upper and lower die assemblies 202 and 204 for cold-forming a cylindrical lead alloy blank 206 of a predetermined mass into a shaped pre-form 208 shown in Figure 13. Pre-form 208 is similar to pre-form element 42 of Figure 1A but has a centralised diametric web 210 separating indented depressions 207, 209 cold-formed by die-set tooling. The mass of the pre-form 208 is greater than that of pre-form element 42 by the amount of web mass which is removed by simple tooling prior to finish forming.

Initially, the blank 206 is mounted into a cylindrical bore of a die element 212 of the lower die assembly 204 that is secured to a supporting cushion plate 213 by holder block 214 which is fastened to the cushion plate 213 by screws 215. Cushion plate 213 is supported by cushion springs exampled by helical spring 216 having an upper end mounted in a pocket 218 in the cushion plate 213 and a lower end mounted in a pocket 220 of a bolster plate 222 which is supported by a bed of a die-operating press. The cushion spring 216 surrounds connector bolts 224 that extend through bolt openings in the support and bolster plates. Hex nuts and flat washers on the upper end of the bolts 224 provide an upper stop 226 for the support plate 213 which is urged upwardly into the stop 226 by the force of the cushion springs 216.

Extending upwardly from the bolster plate 222 is an arbor end square punch 227 which projects into the central bore of the die element 212 and into supporting contact with the lower end of the cylindrical blank 206. The lower end of this punch has an enlarged cylindrical head 230 secured in a corresponding opening in the bolster plate 222 by a washer-like mounting ring 232 and screws 234.

An upright guidepost 236 extends from connection with the bolster plate 222 through supporting guide bushing 238 that is secured to the cushion plate 213 and into an upper guide bushing 240 fixed within an opening 242 extending through a punch shoe 244 which is attached to a press ram.

The upper die assembly 202 has a cold-forming die 246 at the working end thereof with cylindrical die cavity openings 248 and 250 therein joined by a tapered annular shoulder 251 as shown in Figures 11 to 13.

The die 246 is mounted within a die holder 252 that is fastened to an intermediate connector block 254 by screws 256. In turn, the connector block 254 Is secured to a centre post 260 and to the punch shoe by screws 262.

The centre post 260 carries an elongated cylindrical centre punch arbor 264 which extends axially through mounting plate 266 in the centre post into the cylindrical die cavities 248 and 250. This mounting plate 266 is held in position by a annular spacer 268 that is mounted on top of an annular mounting shoulder 253 of the spacer block 254. The cylindrical spacer 268 has a cylindrical chamber 274 for the cylindrical head 270 of a vertically-movable part-stripper 272, an elongated barrel of which surrounds the centre punch abor 264 and extends through a central opening in the connector block 254 and a central opening in a stripper guide block 276. The part-stripper 272 terminates in an annular end 278 providing the upper end of the die opening 248 to limit the flow of the metallic material of the blank 206 and thereby establish the limit of the stem of the pre-form 208 when the die is moved to the position shown in Figure 13. Helical spring 280 seated on top of the stripper guide block 276 extends upwardly around the barrel of the stripper into contact with the head 270 of the stripper to provide the spring force to move the stripper to the up and retracted position. An actuator 282 has three sliding rods 284 (only one of which is shown) that slide through the centre post 260 and the plate 266 into engagement with the head 270 of the stripper 272. When the die is opened, and on movement of the rods 284 downwardly by the actuator 282, the stripper 272 is urged downwardly to remove the pre-form 208 from the upper die assembly 202 when it is opened and moved vertically from the position shown in Figure 13.

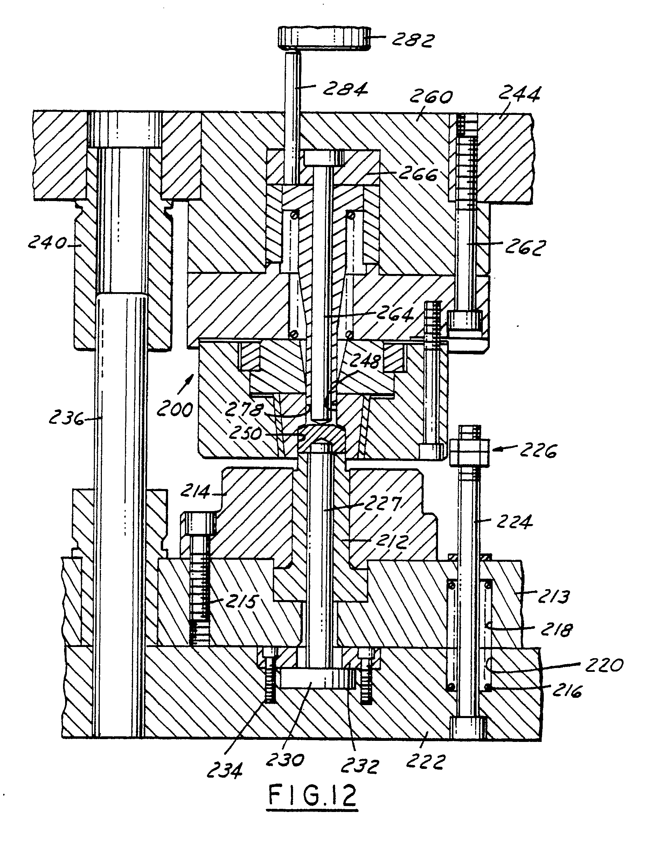

For loading, the upper and lower die assemblies 202, 204 are moved relatively to one anotherin an axial direction by the press to an open position (not illustrated). After the cylindrical blank 206 has been loaded into the die set 200, the dies are moved to the position shown in Figure 11 established by a contact member 285 extending downwardly from the punch shoe 244 into contact with a head 286 of a movable stop pin 287 held in a stop position by resilient Belleville spring washers 288 and mounted for axial movement through cushion plate 213. The upper die assembly 202 is moved to the position shown in Figure 12, in which the doughnut-shaped pre-form is being made. On continuance of the die movement to the position shown in Figure 13, the stem of the pre-form 208 has been extruded reversely and the upper punch arbor 264 enters the pre-form 208 to approach the lower punch 227 so that the web 210 is formed in the pre-form 208.

After the pre-form 208 is cold-formed by the powered movement of the upper die assembly 202 into the position shown by Figure 13, the upper die assembly 202 is raised and sufficiently cleared of the lower die assembly 204 and the pre-form 208 is ejected from the die set 200. The web 210 is then punched out by suitable tooling to complete the cylindrical opening and subtract a given mass from the pre-form 208 so that it corresponds in shape, size and mass to the pre-form 42 shown in Figure 1A.

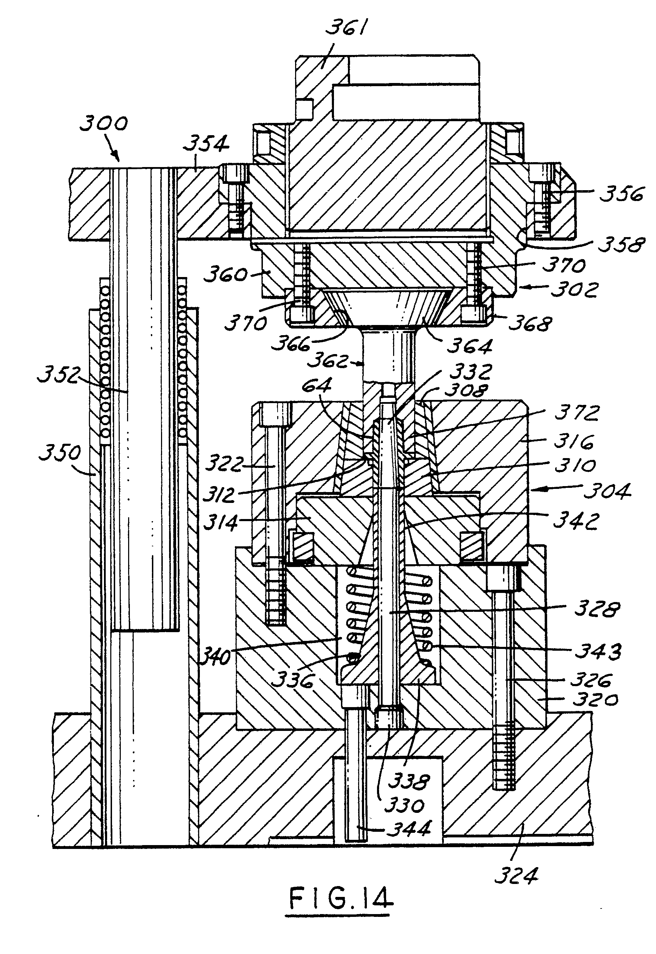

The pre-form 42 is then loaded into a compound die set 300 shown in Figure 14, having upper die assembly 302 movable between open and closed positions with respect to lower die assembly 304.

The lower die assembly 304 has top and bottom die blocks 308 and 310 stacked to form a die cavity 312 which is configured to form the anti-turn lugs 62 and the outer surface of the stem portion 46 of terminal bushing 64. The stacked die blocks 308 and 310 are supported by a part-ejector guide block 314. The die and guide blocks are held in operative position by die block holder 316 secured to a centre post 320 by screw 322. The centre post 320 is mounted to a bolster plate 324 by screw 326. In addition to the forming dies 308 and 310, the lower die assembly incorporates an upstanding and generally cylindrical arbor 328 which extends from its mounting by headed end 330 in the centre post 320 to a tapered upper end 332 which is axially within the die cavity 312 to form a die surface so that the inner wall of the bushing 64 cold-formed thereon is tapered to slidably and snugly fit over the tapered end of the battery post 103 shown in Figure 7.

A part-ejector 336 is mounted for vertical movement in the lower die assembly and has headed portion 338 housed within a cavity 340 in the centre post 320 and a cylindrical ejector portion 342 extending from the head portion and around the arbor 328 into the lower die block 310 to form the lower end of die cavity 312. Helical spring 342 in cavity 340 urges the ejector to its down or retracted position. Three ejector pins 344 (only one of which is shown) extend through the plate 324 and centre post 320 to contact the lower side of the head 338 of the ejector 336 so that the cold-formed bushing 64 can be ejected from the die set when the die set is opened.

The upper die assembly 302 is supported for linear movement between a closed position shown in Figure 14 in which the bushing 64 is cold-formed and an open position in which the lower die is cleared and the cold-formed bushing 64 can be ejected therefrom. Guide sleeve 350 is mounted to the bolster plate 324 and telescopically receives a cylindrical guide post 352 depending from a punch shoe 354. Secured by screws 356 within shoulder opening 358 in the punch shoe 354 is a mounting block 360 which is connected to a pneumatic or hydraulic actuator by an adaptor 361 secured thereto. An elongated cylindrical punch 362 has an uppermost, tapered head 364 which fits into a corresponding tapered opening 366 provided by a retainer ring 368 that is removably secured to mounting block 360 by screws 370. By this holding means, the punch 362 can be interchanged or replaced by another punch having a different cavity for cold-forming another size of bushing. For example, a bushing of a smaller size may be produced with a replacement punch with a smaller die cavity so that bushings for positive and negative posts having different sizes can be cold-formed by the same machinery.

An inner forming wall 372 of the punch 362 conforms to the conical outer shape of the bushing tower 96 and the upper end of this wall is inwardly radiused to meet with the upper end of the arbor to limit the extent of the reverse extrusion of pre-form metal when the die is moved to the positon shown in Figure 14. This positively limits the height of the tower 96 and the lower end of the stem 46 is limited by the ejector 336. Any excess material is forced into the portion of the die cavity forming the flange 98 (i.e., a now critically-dimensioned portion of the bushing 64). Such excess material may increase the vertical height of the flange by forcing the punch upwards against the hydraulic force of the die actuator. Accordingly, with the present invention, the bushing 64 is completely cold-formed by simultaneous reverse and forward extrusion and with anti-turn lugs 62 being coined in the lower portion of the flange 98 having a predetermined and fixed radius.

The mass of the finished bushing is substantially the same as that of the pre-form that was loaded into the die assembly 300. This bushing is a precision-formed part which meets specifications for immediate installation (i.e., without additional sizing) into a battery cover where it is spun over to connect the bushing to the cover. The cover is then inserted onto the terminal posts such that the tops thereof are co-planar so that they can be fused together by a conventional welding operation to provide a finely finished battery. Since bushing porosity has been substantially eliminated, there can be substantially no leakage or flow of battery fluid through the bushings so that the rejection of bushings on this basis has been eliminated.

With the preferred cold-working of the material to form the doughnut-shaped pre-form and with subsequent cold-working operation by the dies to produce the stemmed pre-form, a bushing is completed by the cold forming process and dies described above which sets new standards for minimized porosity and maximized strength with precise dimensions as it comes from the dies without further operation for completion.

The detailed description and drawings are illustrative of the preferred embodiments and processes of this invention which may be modified in accordance with specific needs and circumstances. The scope of the invention is therefore not to be limited specifically to the particular description with reference to the accompanying drawings as such but by the scope of the following claims.

## Claims

1. A process of making a metallic pre-form (42;208) into a finished bushing (64) having a central opening and an annular mounting flange portion (98) lying between a lower stem (46) and an upper tower (96) for use as a terminal for a battery, which process includes the steps of providing a blank (20;206) of electrically-conductive material with a predetermined mass and then cold-forming said blank (20;206) by a two-way extrusion procedure into a substantially cylindrical workpart with at least one cylindrical portion (44) between the ends thereof which has an outer diameter which equals the diameter of said flange portion (98) of said finished bushing (64), characterised in that the process also includes the steps of making a continuous opening through said workpart along the central axis thereof so as to provide said workpart with a predetermined remainder mass; cold-working said workpart so as to extrude in one direction a substantially cylindrical stem (46) joined to said cylindrical portion (44) and having a diameter less than the diameter of said cylindrical portion (44) to complete said pre-form (42;208); and cold-forming said cylindrical portion of said pre-form (42;208) to extrude an annular tower (96) in a second direction opposite to said first direction, said tower (96) being reduced in diameter with respect to said cylindrical portion (44), and to establish said cylindrical portion (44) as said annular mounting flange (98) between said stem (46) and said tower (96) and to thereby finish said bushing (64) with a mass equal to said remainder mass.

2. A process according to claim 1, characterised in that the coining of arcuately-spaced lugs (62) on a lower surface of said flange portion (98) takes place as said stem (46) is shaped and said tower (96) is extruded.

3. A process according to claim 1 or 2, characterised in that the opening through said workpart is made by removing a predetermined mass (210) from a centre portion of said workpart so that said workpart has said continuous opening formed therethrough and has said predetermined remainder mass.

4. A process according to claim 1 or 2, characterised in that said blank (206) has a substantially cylindrical shape between the ends thereof, and, during the cold-forming thereof, depressions (207,209) are formed in said ends of said cylindrical blank (206) which are axially aligned one with the other, so that said cold-formed blank has a web (210) separating said depressions (207,209) from each other; and then said web (210) is removed from between said axially-aligned depressions (207,209) so as to provide said workpart with said continuous opening therethrough and with said predetermined remainder mass.

5. A process according to claim 1 or 2, characterised in that said pre-form (42) has a first substantially cylindrical portion between the ends thereof which constitutes said one cylindrical portion (44) and a second substantially cylindrical portion (46) extending from said first portion that has an outer diameter which is less than the diameter of said first portion, and the process includes cold-forming said pre-form (42) about an arbor (66) conforming to the size and shape of said central opening in said finished bushing (64) and extending through said continuous opening in the pre-form (42) to finish shaping said flange (98) and said stem (46) and to form said tower (96), so as to provide said finished bushing (64) having said mass equal to said remainder mass, said cold-forming being such as to cause said cylindrical portion (44) to flow in said second direction normal to a principal plane of said flange (98).

6. A process according to claim 5, characterised in that said second cylindrical portion is extruded backwardly along said arbor (66) to finish forming said stem (46) whilst said first cylindrical portion (44) is extruded forwardly along said arbor (66) to form said tower (96).

7. A process according to claim 1 or 2, characterised in that said blank (206) is expanded radially outwards to form said one cylindrical portion and thereafter is extruded backwards about an arbor (264) to form said substantially cylindrical stem.

8. A die set (116;300), for cold-working a metallic pre-form (42) by a process according to claim 1, comprising upper (144;302) and lower dies (117;304) movable between an open position in which said pre-form (42) can be inserted into one of said dies (117;304) and a closed position in which said dies (117,144;302,304) co-operatively form a die chamber and said pre-form (42) is cold-worked into a bushing (64), characterised in that there is an arbor (154;328) extending into said chamber to cold-work said pre-form (42) and to shape a continuous passage therethrough, and there is a part-ejector (158;336) associated with said arbor (154;328) to form a limit of a portion of said die chamber and to eject said bushing (64) from one of said dies (117,144;302,304) after said bushing (64) has been made and said dies (117,144;302,304) are moved to said open position.

9. A die set (116;300) according to claim 8, characterised in that said part ejector (158;328) includes a sleeve portion (162;342) mounted for axial movement on said arbor (154;328).

10. A die set (116;300) according to claim 8, characterised in that said arbor (154;328) is an elongated member having a metal working nose portion (156;332) on one end thereof; said upper die (144;304) includes a punch (148;362) with a cold-forming cavity therein with a radius and inwardly-extending upper extremity closed-off by said nose portion (156;332) when said dies (117,144; 302,304) are in said closed position; and said part ejector (158;328) is disposed on said arbor (154;328) and closes off a lower extremity of said chamber.

FIG.2

36
40
22
38
32
32
28
20
34
26
30

FIG.1

20

FIG.1A

44
46
47
42

FIG.3

40
22
36
28
42
44
46
47 26
51
30
48

EP 0 426 312 A2

FIG. 5

FIG. 6

FIG. 7

FIG. 4

FIG.8

FIG.9

FIG.10

EP 0 426 312 A2

EP 0 426 312 A2

FIG.11

11

FIG.12

FIG.13

FIG.14